# EUROPEAN PATENT APPLICATION

(11) **EP 4 468 169 A1**
(43) Date of publication of application: **27.11.2024**
(21) Application number: 23174721.3
(22) Date of filing: 23.05.2023
(51) Int. Cl.: G06F 16/26

(54) **GENERATING AND VISUALIZING AN OBJECT-CENTRIC DATA MODEL GRAPH**

(71) Applicant: Celonis SE, 80333 München (DE)
(72) Inventor: Nolle, Tim, 80333 München (DE); Glampedakis, Yiannis, 80333 München (DE); Doumanis, Thanos, 80333 München (DE); Matthaei, Svenja, 80333 München (DE); Utz, Fabian, 80333 München (DE); Newman, Jonathan, 80333 München (DE)
(74) Representative: 2s-ip Schramm Schneider Bertagnoll Patent- und Rechtsanwälte Part mbB

(57) **Abstract**

Provided is a method to generate a graph layout for an object-centric data model, wherein each object type of the data model is represented as a node and each object-to-object relationship is represented as an edge.

The method comprises generating a hierarchy with a predefined number of levels and several node positions for each level. Each node is assigned to a node position of a level of the hierarchy according to an order of nodes that is determined based on how nodes connected to the respective node are assigned. The nodes are arranged according to the order of nodes in each level of the hierarchy, by minimizing crossings of edges with other edges or nodes.

## Description

### Field of the invention

The invention relates to the field of process mining, in particular to generating and visualizing graph layouts for representing an object-centric data model of process data.

### Background of the invention

Processes are executed everywhere and any time. A process comprises a number of process steps and executing these process steps generates a process instance, also called case. As of today, many processes are monitored, wherein process steps are usually recorded with a number of properties.

With introducing object-centric data models the recorded process data may be transformed into a form that maps concepts of actual process executions precisely and therefore may be also easily perceived by users that are not particularly database engineers. Hence, object-centric data models facilitate the discovery of adequate process models.

An object-centric data model can be achieved by mapping the recorded process data onto objects that participate in executing the process steps and events happening to these objects. This notation enables that one object is related to multiple events, and/or relates to further objects.

In real-world processes, may it be manufacturing a product, cooking a dish, teaching a course, ordering an item, air-traffic controlling, etc., usually a large number of objects participate in the process and therefore form part of the data model. Hence, it is in practice very challenging to keep an overview over the entire process landscape as recorded in the data model and to evaluate relationships between objects as well as between objects and events.

For instance, in the case of manufacturing a car, the objects of the data model may represent the parts of the car being manufactured and the tools used therefore while the events of the data model may represent the steps performed on each part or with a respective tool. While it may be possible to separate the data model into several smaller data models for each (major) part of the car, such a splitting lacks coherences/relations between these parts, although these parts strongly depend on each other during manufacturing of the car. Users therefore should also be enabled to interact with the data model comprising process data of the manufacturing of the entire car, although such a data model comprises a large number of objects and events, ranging above hundreds or even thousands of objects.

### Object of the invention

It is therefore an object of the present invention to provide a method to represent an object-centric data model in a way that the user may evaluate and extend the data model as efficient as possible.

### Solution according to the invention

This object is solved by the computer-implemented method according to the independent claim 1. Advantageous embodiments and modifications are specified in the respective dependent claims.

Provided is therefore a method to generate a graph layout for a data model of process data. The data model is object-centric and comprises several object types, wherein each object type is a collection of object instances which participate in executing a number of process steps recorded in the process data, and a number of object-to-object relationships of which each joins two respective object types.

The method comprises:
- for each object type, querying an identifier and a list of object-to-object relationships from the data model,
- representing each object type as a node on a canvas of a visualization device resulting in several nodes,
- representing each object-to-object relationship as an edge connecting two nodes, which represent the object types of the respective object-to-object relationship, on the canvas,
- generating a hierarchy comprising a predefined number of levels which are distributed along a first direction of the canvas,
- generating several node positions for each level, wherein the node positions are distributed along a second direction of the canvas,
- assigning each node to a node position of a level of the hierarchy according to an order of nodes that is determined based on how nodes connected to the respective node are assigned, and
- generating the graph layout by arranging the nodes on the canvas according to the order of nodes in each level of the hierarchy, so that an overlap of edges connected to each node with further edges and further nodes is minimal.

In an object-centric data model, an object is a digital representation of somebody/something connected to the executed processes that exists in the real world. For example, a customer, a company, an order, a tool, or an invoice. For each object, individual object instances participate during execution of the recorded processes.

Each object instance is characterized by a number of properties, wherein the properties are defined by a standardized definition, which is termed "Object type". For example, the object type "Invoice" may have the property "currency", or the object type "drill" may have the properties "diameter" and "current". Hence, the object type comprises a definition which respective object instances must meet to be assigned to the object type. In some cases there may not by any object instance assigned to an object type, resulting in an empty collection. In the data model, each object type may be represented as a (relational) table which stores related object instances in its rows.

The object types are stored in the data model so that their identifiers may be queried therefrom according to the invention to generate the graph layout. Similarly, the relationships between object types are stored in the data model and may be directly derived from the data model. Once queried, the data based on which the graph is to be build may be stored in a data structure in a volatile memory of a server, e.g., a cache memory. This data structure may comprise a first attribute, in which the respective identifier is stored, a second attribute, in which the object-to-object relationships involving the respective object type may be stored, and further attributes in which a tag assigned to the respective object type, properties of the respective object type and further information may be stored.

The identifier of an object type may be a unique name. The property of an object type comprises several attributes or fields which specify the object instances. In other words, the property of an object type defines which object instances may be assigned to the object type. Object instances, for instance, having different attributes than the attributes required by the property of a specific object type are not assigned to the specific object type.

The method has the advantage that all object types of a data model may be represented in one single graph layout thereby representing a digital twin of the process landscape. The nodes of the graph are connected by edges, wherein the overlap of edges with other edges and edges with nodes is as low as possible. The generated graph may be at first sight overwhelming given the usual large number of object types; however, this particular arrangement of nodes allows the user to evaluate the graph in any desired detail while always maintaining the overall location of nodes of interest in the generated graph layout. The user may, for instance zoom into different regions of the graph layout.

The order of the nodes within each level of the hierarchy may be chosen in such a way that the number of edge crossings/overlaps is small. The number of edge crossings may be determined by a brute force calculation sampling all possible orderings of the nodes within each level. In some examples, in particular for large number of nodes, the problem of minimizing the number of edge crossings may be mapped onto an optimization problem which is solved approximately. In these examples, not all possible combinations of node orderings must be sampled, but only as many combinations as required for convergence of the optimization method.

The hierarchy may be aligned from top to bottom along the first direction of the canvas.

An essential advantage of the method according to the invention is that nodes connected to each other tend to be arranged in vicinity to each other. As a result, the user may focus on different contiguous sections out of the overall graph layout. This advantage results from a combination of the hierarchical arrangement of the nodes under the constraint of low edge-edge overlap and low edge-node overlap, since generally the number of overlaps can be minimized by minimizing the lengths of the edges in the graph layout.

The graph layout may be generated once based on the queried object types and their object-to-object relationships and explored subsequently without having to recalculate the graph data. As a result, the analysis of the generated graph is very resource-efficient, as neither further queries to the data model are required nor additional calculations of the graph layout are required.

The generated graph layout may be subsequently rendered onto the canvas of the visualization device.

Preferably, the first direction is a first principal direction of the canvas, in particular a vertical direction, and the second direction is a second principal direction of the canvas, in particular a horizontal direction.

Aligning the arrangement of the nodes of the graph along two perpendicular axes of the canvas, characterized by their respective principal directions, has the advantage that a hierarchical grid-like graph structure may be achieved. As a result, the nodes may be distributed more evenly across the canvas such that the complete graph may be represented as a whole on the canvas of the visualization device.

The number of hierarchical levels and the number of node positions on each level may be determined according to predetermined parameters defining at least one of compactness and/or wideness of the graph layout. The compactness defines how far and dense the levels are distributed along the first direction, in particular the vertical direction. The wideness defines how far the node positions stretch along each of the levels, i.e., in the second direction, in particular the horizontal direction.

Preferably, the method further comprises:
- querying, for each object type, a tag, wherein the tag represents a cluster of object types in the data model,
- editing the tag, and
- storing the edited tag for the object type in the data model.

By interacting with the graph, the user may also edit the object types, wherein the edited object types are inserted into the data model. Each value stored in an attribute of the data structure of the queried object types may be edited, e.g., the tag. Further, the object-to-object relationships, and properties of the object type may be edited. This feature enables the user to adapt the object types of the graph structure.

Upon editing object types, the graph layout may need to be recalculated and regenerated.

Preferably, the method further comprises:
- providing a filter condition, in particular on the tag, for filtering object types,
- for each obj ect type, performing a test with respect to the filter condition using its previously queried data,
- disabling every node, which represents an object type failing the test, and edge connected thereto in the generated graph layout, and
- generating an updated graph layout by arranging the remaining nodes on the canvas according to the hierarchy.

The filter condition has the advantage that the size of the graph may be reduced according to the needs of a user. In this case, the graph layout needs to be redrawn and recalculated since the number of nodes and edges are modified by setting the filter condition. However, the data of the object types is not needed to be queried again from the data model but is directly accessible from the data structure in the volatile memory of the server. Filter conditions may be based on the tag, which may, e.g., represent the name a process model type, such as "Order to cash", "Accounts receivable", etc., or differentiate custom object types versus standardized object types.

Preferably, the method further comprises:
- querying, for each object type, a property, wherein the property comprises a number of attributes which characterize the object type,
- editing the property, and
- storing the edited property for the object type in the data model.

The property of an object type provides a search requirement to identify corresponding object instances in the recorded process data. By editing the property, even new object types may be generated and stored in the data model. The property of an object type also comprises transformations which are to be applied to translate raw data stored in a source system into the defined object type.

Further preferably, the method further comprises:
- searching for at least one specific object type using a search term,
- identifying the at least one node representing the at least one searched specific object type and every further node representing object types which are directly connected to one of the at least one searched specific object type via the respective object-to-object relationship, and
- highlighting the identified nodes and the respective object-to-object relationships with respect to all other nodes, so that a highlighted subgraph emerges from the generated graph layout within a contiguous section.

Highlighting the identified nodes may comprise zooming and/or panning the graph layout to the identified nodes and their edges. This search feature may be executed on the generated graph layout without having to rearrange the graph layout at all. For object types of a given data model the graph is generated in a way that clusters of nodes emerge which occupy contiguous sections of the graph layout. Upon searching a specific object type, the node representing the specific object type and every of its related nodes, related by object-to-object relationships, are highlighted, resulting in a highlighted cluster within an encapsulated, contiguous section of the graph. Highlighting may also involve lowlighting all unrelated nodes and edges.

Preferably, the method further comprises:
- generating a list of search results comprising all object types of which at least one parameter matches the search term,
- representing the list of search results within the generated graph layout, and
- identifying the at least one node by selecting a specific search result.

This feature enables an explorative search of object types in the generated graph layout. The list of search results may comprise object types of which the name matches at least partially the search string/term, object types related to a tag matching the search term, object-to-object relationships of which the name of at least one object type matches at least partially the search term, and so on. Hence, the list of search result may be a rather long list in practice. With representing the list of search results along with the generated graph, the list may be used as a handle to exploratively iterate the graph.

Preferably, the at least one parameter is at least one of a group consisting of
- the identifier,
- the tag,
- the property, and
- combinations thereof.

Preferably, the method further comprises:
- creating a custom object type by specifying or editing the identifier and/or the tag and/or the property and/or the list of object-to-object relationships, and
- storing the specified or edited identifier and/or tag and/or property and/or list of object-to-object relationships in the data model.

Preferably, generating the graph layout by representing
- each node by essentially a rectangle and a label arranged to a first side of the rectangle, wherein the label represents the name of the respective object type, and
- each edge by essentially a line which begins and ends orthogonally on a side of the respective nodes except for the respective first side.

Further preferably, generating the graph layout by arranging each line representing a respective edge to evade unrelated nodes and any label.

The constraint that each line representing an edge is to begin and end orthogonally on a side of the respective node except for the side at which the node label is arranged along with the constraint that each line should evade unrelated nodes and any label results in a clear and readable graph layout.

In some embodiments, the data model preferably further comprises:
- several event types, wherein each event type is a collection of event instances being part of the number of process steps recorded in the process data,
- a number of event-to-object relationships of which each joins a respective event type unidirectionally to a respective object type,
and the method further comprises querying, for each event type, a tag, a property and a list of event-to-object relationships.

An event is a digital representation of a real-world occurrence that happened, at a single moment in time, to one or more objects connected to the process landscape. For example, an invoice was paid, a user created a purchase order for a vendor's product, a customer placed an order, an order was shipped, the vegetables were cut in a cooking process, or a hole was drilled in a manufacturing process. Every event, also called process step, creates or adds something to an object, or alters one or more properties of the objects involved in the event. Therefore, events may be identified and created based on the timestamps of objects and a number of change meta-objects that are linked to them. A change to an object may be stored in a separate table of the data model, wherein this table is also referred to as change meta-object. For example, the event "change price" may be determined from the attributes/fields "NewValue"=19,99 and "OldValue"=14,99 of a related change meta-object.

In this context, each event instance is characterized by a number of properties, wherein the properties are defined by a standardized definition which is termed "event type".

Each event type is related to one or more object types, represented by so-called event-to-object relationships. With the event types and their relationships being queried, the event-to-object relationships may be stored in a further attribute of the data structure underlying the object types in the graph. Hence, the event types, in particular via the event-to-object relationships, also become accessible as a search parameter.

Preferably, the label comprises a count of event types which are related to the respective object type.

This feature has the advantage that the user may identify at a glance how many event types an object type is related to. The larger the number of event types an object type is related to, the more critical the obj ect usually is with respect to process throughput times. Hence, the count of event types may indicate promising directions for subsequent analysis of the process data. Moreover, the more event types relate to an object type, the more impactful the change of a property of the respective object type, so that the count of event types may serve as an important risk indicator for data engineering.

Preferable, the method further comprises:
- searching for at least one object type via the event type and/or the event-to-object relationship,
- identifying the at least one node representing the at least one searched specific object type, and
- highlighting the identified nodes with respect to all object-to-object relationships and all other nodes in the generated graph layout.

Preferably, the method further comprises:
- creating a custom event type by specifying or editing the identifier and/or the tag of the property and/or the list of event-to-object relationships, and
- storing the specified or edited identifier and/or tag and/or property and/or list of event-to-object relationships in the data model.

As a result of these features, the data model may be searched for event types in a similar explorative way than for object types and extended by custom event types and/or edited event types, which enables maximum flexibility for working with the data model.

### Short summary of the figures

Exemplary embodiments of the method according to the invention as well as a number of aspects of the invention are described below in detail in combination with the figures, which show:
- Fig. 1: a graph layout generated according to the invention for an overall process landscape;
- Fig. 2a: a snapshot captured while searching the graph layout of Fig. 1 for a first specific object type; (Option 2)
- Fig. 2b: a snapshot captured while searching the graph layout of Fig. 1 for a second specific object type;
- Fig. 3: a zoomed-in and panned view on the identified network of nodes of Fig. 2b;
- Fig. 4: a zoomed-in and panned view on the nodes identified by a search for a specific event type;
- Fig. 5: a graph layout generated after filtering for custom object types according to an aspect of the invention;
- Fig. 6: a flow chart of an embodiment of the method according to the invention.

### Detailed description of the invention

Real-world processes are often very complex as they involve interactions of a number of object instances, of which each is assigned to an object type. Object types may be related in one-to-many connections and/or many-to-many connections, resulting in a process landscape which may be overwhelming and hard to understand.

Therefore, usually, the process landscape is divided into different parts before being represented and analyzed.

According to the invention, in contrast, all object types of an object-centric data model may be queried and cached into a data structure. Representing the object types as nodes and the object-to-object relationships as edges connecting the nodes enables a very compact representation of the process landscape of a business. Note that the event types, which describe changes applied to instances of an object type, are rather kept behind the scenes of the graph layout, meaning that event types are not explicitly represented in the graph layout. The event types may be stored by way of event-to-object relationships within the cached data structure of respective object types, and represented in an aggregated way by way of a count 19 of event types related to a respective object type.

Despite prioritizing the representation of object types over event types, the resulting graph layout for a real-world process landscape consists of so many nodes and edges that the overall view resembles more of a bird's eye view from which details may easily be missed.

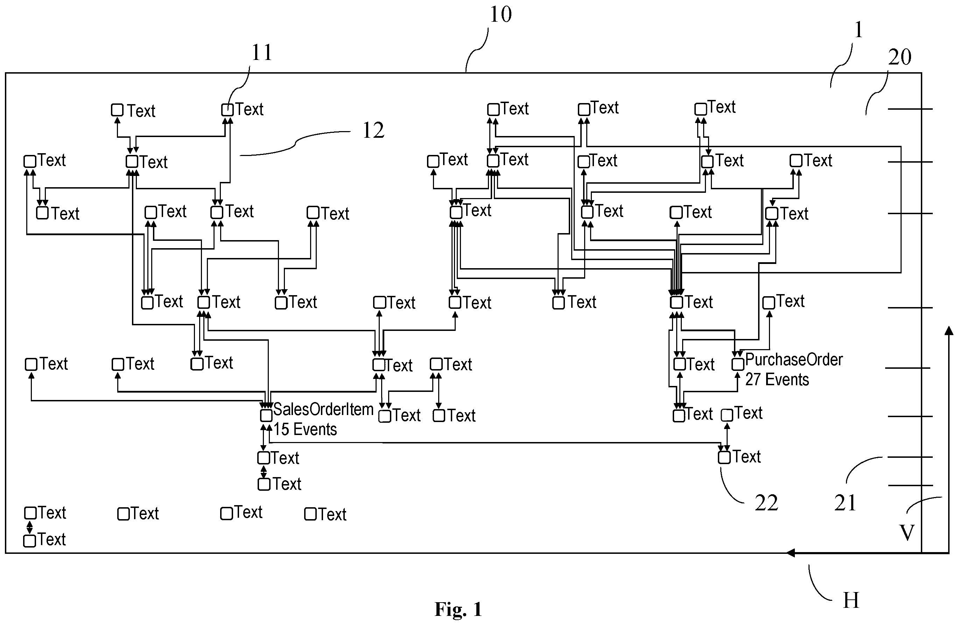

**Fig. 1** shows a graph layout generated according to the invention for an overall process landscape.

The graph of Fig. 1 summarizes the complete data model of a business in a single graph. Likewise, the complete data model of manufacturing a product, e.g. a car, may be summarized and represented in a similar graph according to the method of the invention.

The nodes 11 may be represented by rounded squares, the edges 12 by arrow-headed lines. The size of the squares may be predetermined and taken into account when generating the node positions, since the larger the size of a node, the less nodes may be arranged in a respective level of the hierarchy.

The graph layout 1 is structured in several levels 21 of a hierarchy 20 which are stacked on top of each other in vertical direction V of the canvas 10. In the example of Fig. 1 the hierarchy comprises 8 levels, as indicated by the right-handed horizontal lines. Additionally, the nodes 11 assigned to each level 21 are ordered such that the number of overlaps/crossings between edges 12 is minimal. Overlaps of edges 12 with nodes 11 are completely avoided, also due to the constraint that each line representing an edge 12 must end and begin orthogonally on the respective nodes 11.

The arrows of each edge 12 represent the direction of an object-to-object relationship. In the example of Fig. 1, all object-to-object relationships are bidirectional. The example comprises one-to-one, one-to-many and many-to-many object-to-object relationships. Hence, the resulting graph is rather complicated to read and understand, yet it summarizes the complete process landscape of a business and therefore may be referred to as digital twin of the business. Likewise, a digital twin of a process landscape of a factory may be generated as a graph according to an aspect of the invention.

The core idea of the invention becomes tangible upon shedding light on the explorative search capabilities of the graph layout 1.

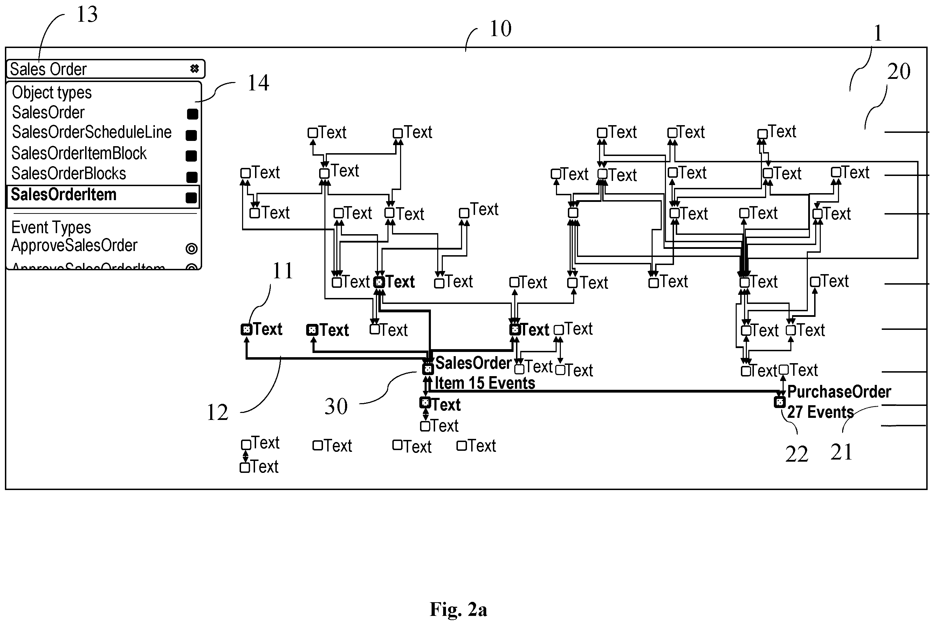

**Fig. 2a** is a snapshot captured while searching the graph layout of Fig. 1 for a first specific object type, the "SalesOrder".

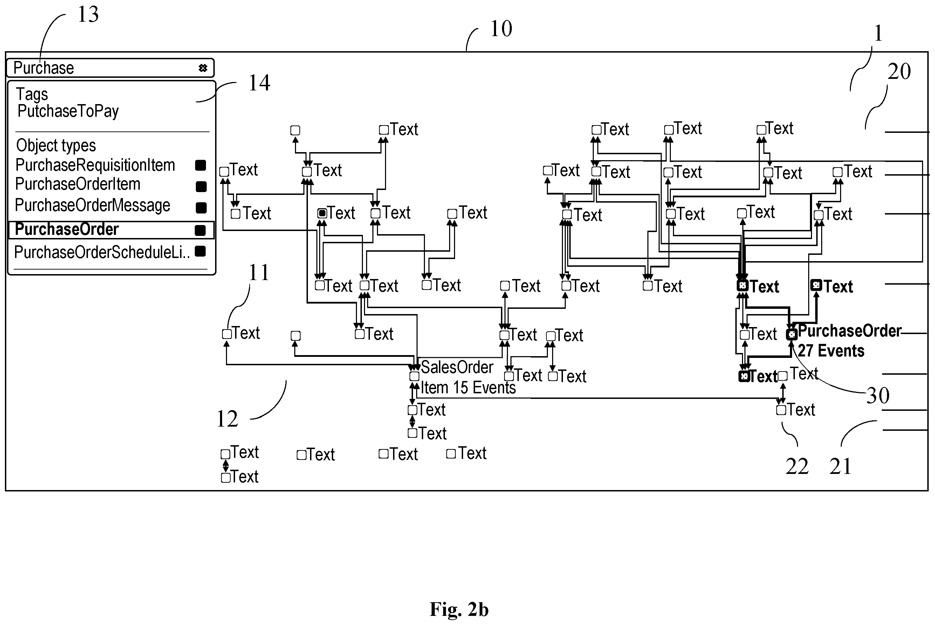

**Fig. 2b** is a snapshot captured while searching the graph layout of Fig. 1 for a first specific object type, the "PurchaseOrder".

In both cases, the graph layout 1, i.e., the arrangement of edges 11 and nodes 12 is identical to the graph layout 1 of Fig. 1, however, the found specific object types 30 are highlighted. Along with the found specific object type 30, also the object-to-object relationships connected to the respective specific object type 30 and the object types connected to the respective specific object type via object-to-object relationships are highlighted.

Highlighting the search result in the example of Figs. 2a and 2b is achieved by lowlighting all edges 12 and nodes 11 which are unrelated to the searched specific object type 30. Lowlighting nodes 11 and edges 12 is very efficient since only essentially one parameter of the appearance of the respective nodes 11 needs to be modified. In every other aspect, the entire graph layout 1 may be maintained.

The two examples of searched specific object types 30 emphasize the functional character of the generated graph layout 1 for subsequent analysis. Each node 11 representing an object type is arranged so that its directly related nodes 11 are arranged in close vicinity. Hence, highlighting a searched node with its related nodes always results in a contiguous section of the graph layout 1. In other words, the highlighted nodes are not scattered over the entire graph layout 1, but arranged initially such that each and every search may direct the focus onto a specific section of the graph or subgraph, i.e., part of the data model.

In Fig. 2a, the highlighted contiguous section emerges at the lower left side of the graph layout 2. In Fig. 2b, in contrast, the highlighted contiguous section emerges at the lower right side of the graph layout 2 and even is more compact than the respective section highlighted in Fig. 2a.

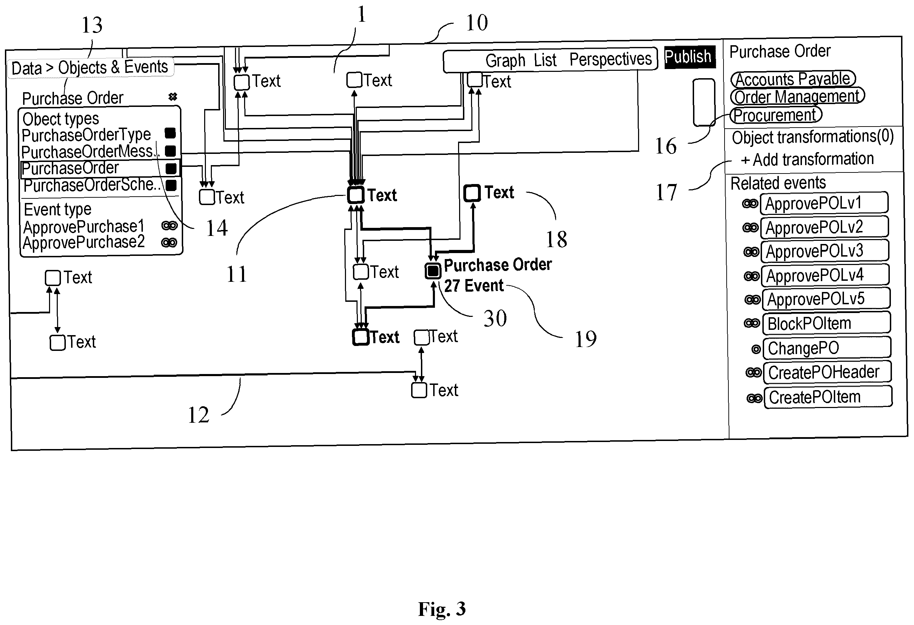

**Fig. 3** shows a zoomed-in and panned view on the identified network of nodes of Fig. 2b

Highlighting the found specific object types in the graph layout 1 may also include zooming and panning to the respective section of the graph. Note that the graph layout 1 itself remains untouched; only the view is realigned to focus better on the identified node along with the nodes it is related to.

The search term 13 may be entered into an input field which may be also arranged on the canvas. The search term 13 may be matched with names of object types, tags, event types, object-to-object relationships and event-to-object relationships, producing a list of search results 14. The list of search results 14 may be displayed as a pop-down menu of the search input field and kept open for an explorative search of the graph until the user actively closes the search result 14.

The user may further select individual nodes 11 of the graph. In the example of Fig. 3, the node 11 representing the search object type "PurchaseOrder" is selected resulting in a popup window representing detailed information on the object type. The popup window for the object type "PurchaseOrder" is arranged on the right edge of the canvas in the example of Fig. 3 to drill down into the object type details of the searched object type.

Said popup window may represent values stored in the data structure of the respective object types. In the example of Fig. 3, the popup window comprises tags 16, such as "AccountsPayable", "OrderToCash", or "PurchaseToPay". Moreover, the popup window may comprise a list of object transformations which is a property 17 of the object type. In the example of Fig. 3, the list of object transformations is empty. Further, the popup window may comprise a list of related events and/or objects and a list of object type properties 17. In the example of Fig.3, the object type "PurchaseOrder" is related to 27 event types, resulting in a long list of related events of which only the top section is shown in Fig. 3.

By selecting and clicking on a specific related event type, a further popup window may open to drill down into event type details of the selected event type.

By way of the popup window, the user may explore the connections to each object type in full detail.

Each node 11 may be represented with a label 18 of the respective object type and a count 19 of event types related to the respective object type.

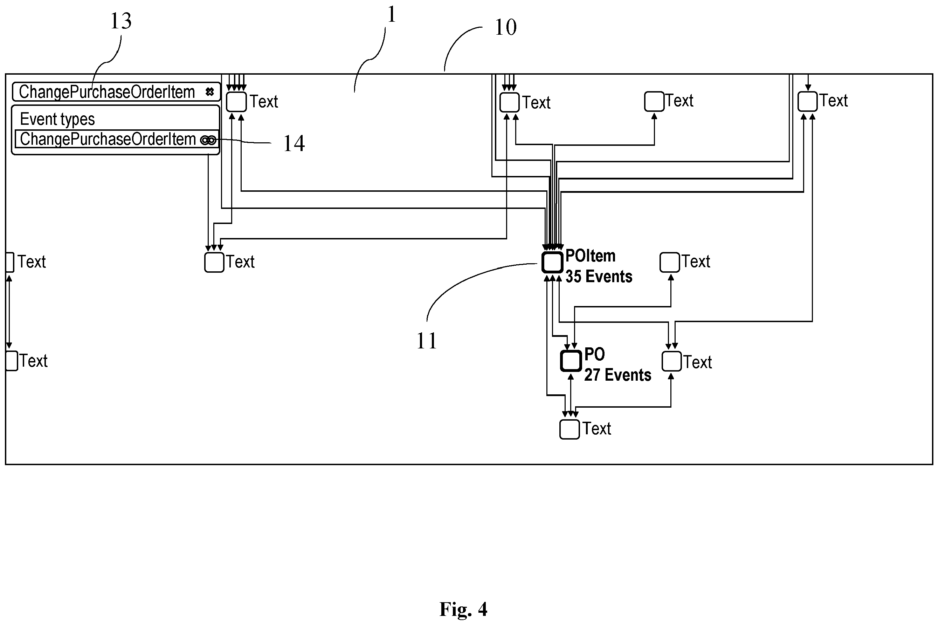

**Fig. 4** shows a zoomed-in and panned view on the nodes identified by a search for a specific event type.

The search capability may also find specific event types in the graph layout 2. A searched event type may be identified by highlighting all nodes representing object types which are related to the searched event type. Hence, a user may quickly identify which object types are affected by the searched specific event type.

The specific event type searched in the example of Fig. 4 is the "ChangePurchaseOrderItem", which is only related to two object types out of the full graph, the "PurchaseOrder" and "PurchaseOrderItem". Hence, only the two nodes representing these two object types are highlighted with respect to the other nodes and edges.

Preferably, the user may exit the highlighted view after a search by a single click on the canvas.

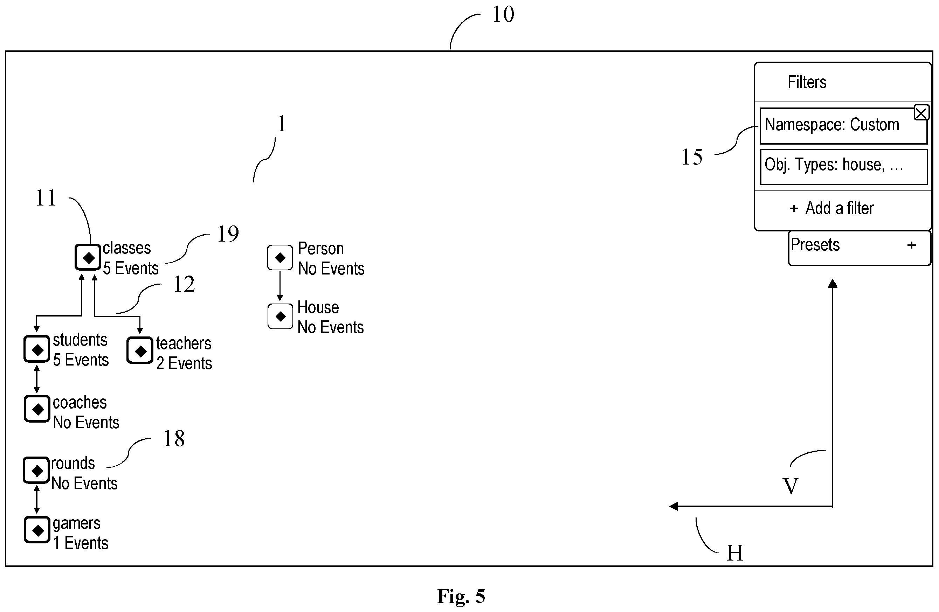

**Fig. 5** shows a graph layout generated after filtering for custom object types according to an aspect of the invention.

The graph of the example of Fig. 5 communicates a process landscape of an all-day school. While the overall process landscape is very complex and challenging to grasp, this example focuses on the filtering functionality of the graph layout 1. The filter condition 15 is set to the namespace of custom object types which strongly reduces the number of nodes 11 and edges 12 arranged in the resulting graph. When filtering, the graph only shows the object types and object-to-object relationships that apply to the filter. Additionally, the graph is realigned to make it easily navigable.

The nodes 11 that do not apply to the filter are disables, e.g., by modifying a parameter controlling the presence of a node 11. Neither the graph data is to be queried again, nor the cached data structure of the object types is to be updated, so that the filter condition may be applied as efficient as possible.

According to an aspect of the invention, custom object types and event types may be generated and stored in the data model. Hence, custom object types are not initially queried from the data model but rather added to the data model on the go.

Further filter conditions 15 may be, e.g., the tag 16 or even object type names.

Fig. 6 shows a flow chart of an embodiment of the method according to the invention.

In a first step, querying several object types from the data model. In typical process landscapes, there may be hundreds to thousands and more object types in an object-centric data model.

Each object type comprises an identifier and a list of object-to-object relationships. In some embodiments, each object type further comprises a list of event-to-object relationships. The query result for each object type may be stored, in particular cached, in a data structure, for fast lookups during an explorative search and drill-down into details of specific object types.

In a second step, representing each object type as a node and each object-to-object relationship as an edge on the canvas of a visualization device.

In a third step, generating a hierarchy comprising a predefined number of levels which are distributed along a first direction of the canvas.

In a fourth step, generating several node positions for each level, wherein the node positions are distributed along a second direction of the canvas.

The levels of the hierarchy and the node positions therefore provide a sort of two-dimensional grid into which the nodes may be arranged.

In a fifth step, assigning each node to a node position of a level of the hierarchy according to an order of nodes that is determined based on how nodes are connected to other nodes.

The nodes are assigned iteratively to the node positions of the levels of the hierarchy. A node is assigned to a specific node position in a specific level depending on which level previous nodes that are connected to the node are assigned.

In a sixth step, generating the graph layout by arranging the nodes on the canvas according to the order of nodes in each level of the hierarchy, so that an overlap of edges connected to each node with further edges and further nodes is minimal.

Further, the generated graph layout may be rendered/drawn onto the canvas of the visualization device.

### Reference numerals:

- 1: graph layout
- 10: canvas
- 11: node
- 12: edge
- 13: search term
- 14: search result
- 15: filter condition
- 16: tag
- 17: property
- 18: label
- 19: count of event types
- 20: hierarchy
- 21: level of the hierarchy
- 22: node position of the level
- 30: specific object type

- V: first direction of the canvas
- H: second direction of the canvas

## Claims

1. Method to generate a graph layout for a data model of process data, wherein the data model is object-centric and comprises:
- several object types, wherein each object type is a collection of object instances which participate in executing a number of process steps recorded in the process data,
- a number of object-to-object relationships of which each joins two respective object types,
the method comprising:
- for each object type, querying an identifier and a list of object-to-object relationships from the data model,
- representing each object type as a node on a canvas of a visualization device resulting in several nodes,
- representing each object-to-object relationship as an edge connecting two nodes, which represent the object types of the respective object-to-object relationship, on the canvas,
- generating a hierarchy comprising a predefined number of levels which are distributed along a first direction of the canvas,
- generating several node positions for each level, wherein the node positions are distributed along a second direction of the canvas,
- assigning each node to a node position of a level of the hierarchy according to an order of nodes that is determined based on how nodes connected to the respective node are assigned, and
- generating the graph layout by arranging the nodes on the canvas according to the order of nodes in each level of the hierarchy, so that an overlap of edges connected to each node with further edges and further nodes is minimal.

2. The method of claim 1, wherein the first direction is a first principal direction of the canvas, in particular a vertical direction, and the second direction is a second principal direction of the canvas, in particular a horizontal direction.

3. The method of claim 1, wherein the method further comprises:
- querying, for each object type, a tag, wherein the tag represents a cluster of object types in the data model,
- editing the tag, and
- storing the edited tag for the object type in the data model.

4. The method of claim 3, further comprising:
- providing a filter condition, in particular on the tag, for filtering object types,
- for each object type, performing a test with respect to the filter condition using its previously queried data,
- disabling every node, which represents an object type failing the test, and edge connected thereto in the generated graph layout, and
- generating an updated graph layout by arranging the remaining nodes on the canvas according to the hierarchy.

5. The method of claim 1, wherein the method further comprises:
- querying, for each object type, a property, wherein the property comprises a number of attributes which characterize the object type,
- editing the property, and
- storing the edited property for the object type in the data model.

6. The method of any of the preceding claims, further comprising:
- searching for at least one specific object type using a search term,
- identifying the at least one node representing the at least one searched specific object type and every further node representing object types which are directly connected to one of the at least one searched specific object type via the respective object-to-object relationship, and
- highlighting the identified nodes and the respective object-to-object relationships with respect to all other nodes, so that a highlighted subgraph emerges from the generated graph layout within a contiguous section.

7. The method of claim 6, further comprising:
- generating a list of search results comprising all object types of which at least one parameter matches the search term,
- representing the list of search results within the generated graph layout, and
- identifying the at least one node by selecting a specific search result.

8. The method of claim 7, wherein the at least one parameter is at least one of a group consisting of:
- the identifier,
- the tag,
- the property, and
- combinations thereof.

9. The method of any of the preceding claims, further comprising:
- creating a custom object type by specifying or editing the identifier and/or the tag and/or the property and/or the list of object-to-object relationships, and
- storing the specified or edited identifier and/or tag and/or property and/or list of object-to-object relationships in the data model.

10. The method of claim 1, wherein generating the graph layout by representing
- each node by essentially a rectangle and a label arranged to a first side of the rectangle, wherein the label represents the name of the respective object type, and
- each edge by essentially a line which begins and ends orthogonally on a side of the respective nodes except for the respective first side.

11. The method of claim 9, wherein generating the graph layout by arranging each line representing a respective edge to evade unrelated nodes and any label.

12. The method of any of the preceding claims, wherein the data model further comprises:
- several event types, wherein each event type is a collection of event instances being part of the number of process steps recorded in the process data,
- a number of event-to-object relationships of which each joins a respective event type unidirectionally to a respective object type,
and the method further comprises querying, for each event type, a tag, a property and a list of event-to-object relationships.

13. The method of claim 11, wherein the label comprises a count of event types which are related to the respective object type.

14. The method of claim 11, further comprising:
- searching for at least one object type via the event type and/or the event-to-object relationship,
- identifying the at least one node representing the at least one searched specific object type, and
- highlighting the identified nodes with respect to all object-to-object relationships and all other nodes in the generated graph layout.

15. The method of claim 11, further comprising:
- creating a custom event type by specifying or editing the identifier and/or the tag of the property and/or the list of event-to-object relationships, and
- storing the specified or edited identifier and/or tag and/or property and/or list of event-to-object relationships in the data model.
